# EUROPEAN PATENT SPECIFICATION

(11) **EP 4 231 507 B1**
(45) Date of publication and mention of the grant of the patent: **04.12.2024**
(21) Application number: 21879861.9
(22) Date of filing: 27.09.2021
(51) Int. Cl.: H02K 5/08, H02K 5/24, F16F 15/08, F16F 1/38

(54) **MOLD MOTOR**
FORMMOTOR
MOTEUR DE MOULAGE

(30) Priority: 16.10.2020 JP 2020174302
(43) Date of publication of application: 23.08.2023
(73) Proprietor: Panasonic Intellectual Property Management Co., Ltd., Osaka-shi, Osaka 540-6207 (JP)
(72) Inventor: NANBU, Yasuo, Osaka-shi, Osaka 540-6207 (JP); SAITO, Koichi, Osaka-shi, Osaka 540-6207 (JP)
(74) Representative: SSM Sandmair
(86) International application number: PCT/JP2021/035241
(87) International publication number: WO 2022/080120

(56) References cited:
- JP-A- 2019 004 568
- JP-A- 2019 004 568
- JP-A- H11 346 461
- JP-A- H11 346 461
- US-B2- 9 976 619

## Description

### TECHNICAL FIELD

The present disclosure relates to a mold motor.

### BACKGROUND ART

Motors are used in home electric apparatuses and various apparatuses. For example, a motor is used as a fan motor mounted on an outdoor unit of an air conditioner. A fan motor includes a motor having a stator and a rotor, and a rotary fan attached to a rotating shaft of the motor.

A fan motor used in an outdoor unit of an air conditioner is installed in a body (installation object) of the outdoor unit. In this case, the fan motor is attached to the body of the outdoor unit with vibration-proof rubber interposed so that vibration generated by the fan motor is not transmitted to the outside (see PTLs 1 and 2). This can suppress the vibration of the fan motor from being transmitted to the body of the outdoor unit, and therefore noise reduction can be achieved.

As a motor in a fan motor, a mold motor in which a stator is covered with mold resin is used. The mold motor includes, for example, a stator, a rotor disposed inside the stator, and a mold resin covering the stator from the outside. In the mold motor, the mold resin constitutes an outline of the mold motor (see PTL 3).

When the mold motor is installed on the installation object with vibration-proof rubber interposed, the vibration-proof rubber is attached to the leg protruding outward from the side surface of the mold resin, and the vibration-proof rubber and the installation object are fixed with a screw or the like. For example, when the fan motor including the mold motor is installed in the body of the outdoor unit, the fan motor can be attached to the body of the outdoor unit by fixing the vibration-proof rubber attached to the leg of the mold motor and the body of the outdoor unit with screws (see PTLs 4 and 5).

In this case, after the stator is covered with the mold resin to complete the stator mold, the vibration-proof rubber is attached to the leg of the mold resin. That is, the vibration-proof rubber is retrofitted to the mold resin.

However, in recent years, there is a concern about occurrence of an event in which the mold motor installed on the installation object with the vibration-proof rubber interposed falls off from the installation object due to expansion of the force of a typhoon, occurrence of an earthquake, or the like. In particular, since the frequency of occurrence of typhoons having an extremely large force that is expressed even once every several decades is high, it is strongly required to prevent the fan motor having the mold motor in which the vibration-proof rubber is retrofitted to the mold resin from falling off the body of the outdoor unit.

### Citation List

### Patent Literature

PTL 1: Unexamined Japanese Patent Publication No. 6-307661
PTL 2: Unexamined Japanese Patent Publication No. 2017-67154
PTL 3: JP H 11 346461A
PTL 4: JP 2019 004568A
PTL 5: US 9 976 919

### SUMMARY OF THE INVENTION

The present disclosure has been made in order to solve such problem. An object of the present disclosure is to provide a mold motor as disclosed in independent claim 1 capable of suppressing the mold motor from falling off from an installation object even when the mold motor is installed on the installation object using vibration-proof rubber for noise reduction.

In order to achieve the above object, one aspect of a mold motor according to the present disclosure includes a stator; a rotor including a rotation shaft and rotating by a magnetic force of the stator; a mold resin covering at least a part of the stator; an elastic body attached to an installation object in which the mold motor is installed; and one or more hard members disposed around the elastic body, the one or more hard members being harder than the elastic body, in which the elastic body and the one or more hard members are fixed to the mold resin by integral molding.

It is preferable that the mold resin includes a protrusion protruding outward in a radial direction that is a direction orthogonal to an axial direction of the rotation shaft, and the elastic body and the hard members are disposed in the protrusion.

It is preferable that the mold motor includes a tubular member as the hard member, and the tubular member is disposed outside the elastic body to surround the elastic body.

A part of the tubular member may be embedded in the elastic body.

The mold motor may include a first tubular member and a second tubular member as the hard members, the first tubular member may be disposed outside the elastic body to surround the elastic body, and the second tubular member may be disposed inside the elastic body.

At least one of the first tubular member and the second tubular member is partially embedded in the elastic body.

It is preferable that the hard members are made of a metal material.

The mold resin may be made of an unsaturated polyester resin.

The elastic body may be provided with an insertion hole through which a fixing member for attaching the mold motor to the installation object is inserted.

It is preferable that the elastic body is a vibration-proof rubber that suppresses transmission of vibration generated in the mold motor to the installation object.

It is preferable that the vibration-proof rubber is made of ethylene propylene rubber or nitrile rubber.

According to the present disclosure, it is possible to suppress the mold motor from falling off the installation object even when the mold motor is installed on the installation object using the elastic body.

### BRIEF DESCRIPTION OF THE DRAWINGS

Fig. 1 is a perspective view of a mold motor according to an exemplary embodiment as viewed obliquely from above.
Fig. 2 is a perspective view of the mold motor according to the exemplary embodiment as viewed obliquely from below.
Fig. 3 is a top view of the mold motor according to the exemplary embodiment.
Fig. 4 is a cross-sectional view of the mold motor according to the exemplary embodiment.
Fig. 5 is an enlarged view of region V surrounded by a broken line in Fig. 4.
Fig. 6 is a perspective view of an attachment member in the mold motor according to the exemplary embodiment.
Fig. 7A is a top view of the attachment member according to the exemplary embodiment.
Fig. 7B is a cross-sectional view taken along line VIIB-VIIB in Fig. 7A.
Fig. 8 is a flowchart of a manufacturing method for the mold motor according to the exemplary embodiment.
Fig. 9A is an enlarged view of a protrusion of the mold resin in a mold motor after completed.
Fig. 9B is a view illustrating a state when a mold resin is molded by a mold in a cross section taken along line IXB-IXB in Fig. 9A.
Fig. 10 is a perspective view illustrating a configuration of a conventional mold motor.
Fig. 11 is a flowchart of a manufacturing method for a conventional mold motor.
Fig. 12A is a top view of an attachment member according to a first modification.
Fig. 12B is a cross-sectional view taken along line XIIB-XIIB in Fig. 12A.
Fig. 13A is a top view of an attachment member according to a second modification.
Fig. 13B is a cross-sectional view taken along line XIIIB-XIIIB in Fig. 13A.
Fig. 14A is a top view of an attachment member according to a third modification.
Fig. 14B is a cross-sectional view taken along line XIVB-XIVB in Fig. 14A.
Fig. 15A is a top view of an attachment member according to a fourth modification.
Fig. 15B is a cross-sectional view taken along line XVB-XVB of Fig. 15A.

### DESCRIPTION OF EMBODIMENT

Hereinafter, an exemplary embodiment of the present disclosure will be described with reference to the drawings. Note that the exemplary embodiment described below illustrates one specific example of the present disclosure. Thus, numerical values, configuration elements, placement positions and connection forms of the configuration elements, steps, order of the steps, and the like, which are described in the following exemplary embodiment, are illustrative and are not to limit the scope of the present disclosure. Thus, among the configuration elements in the following exemplary embodiment, configuration elements that are not described in independent claims indicating the highest concept of the present disclosure are described as optional configuration elements.

Note that each of the drawings is a schematic view, and is not necessarily strictly illustrated. In addition, in each of the drawings, substantially the same components are denoted by the same reference marks, and redundant description will be omitted or simplified. In addition, in the present description, the terms "above/up" and "below/down/low" do not necessarily indicate an upward direction (vertically above) and a downward direction (vertically below) in terms of absolute spatial recognition.

### (Exemplary embodiment)

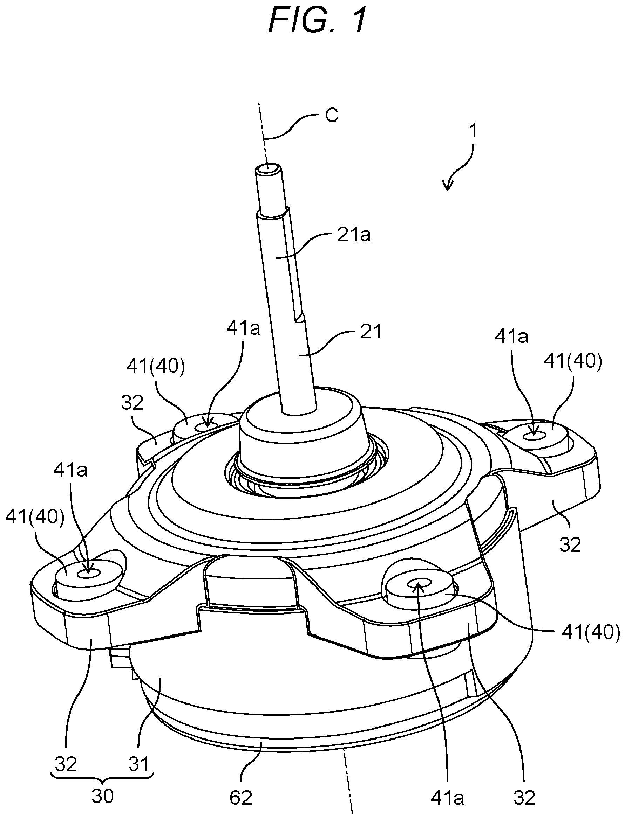

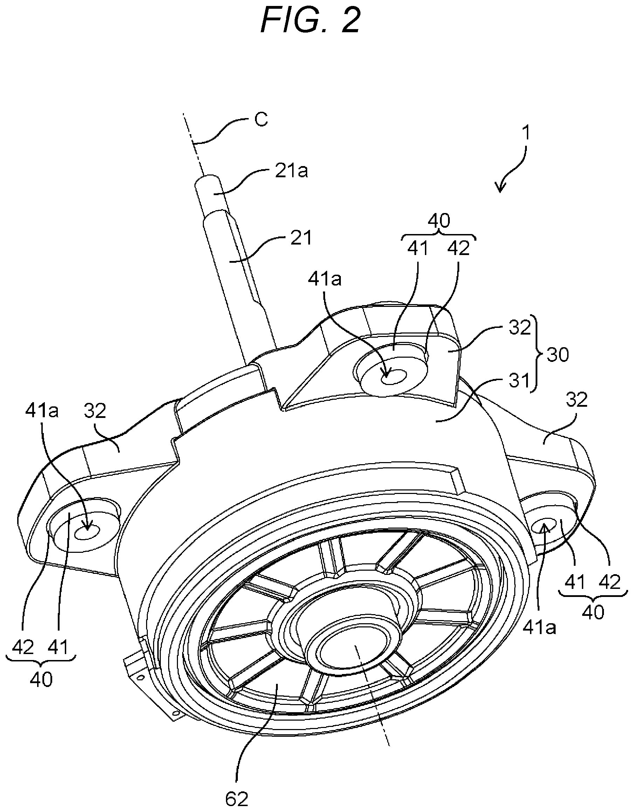

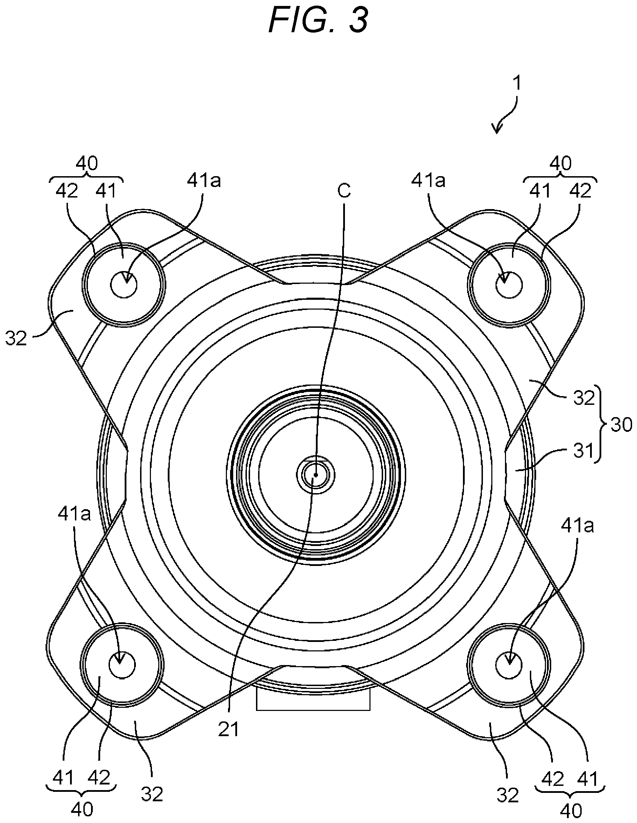

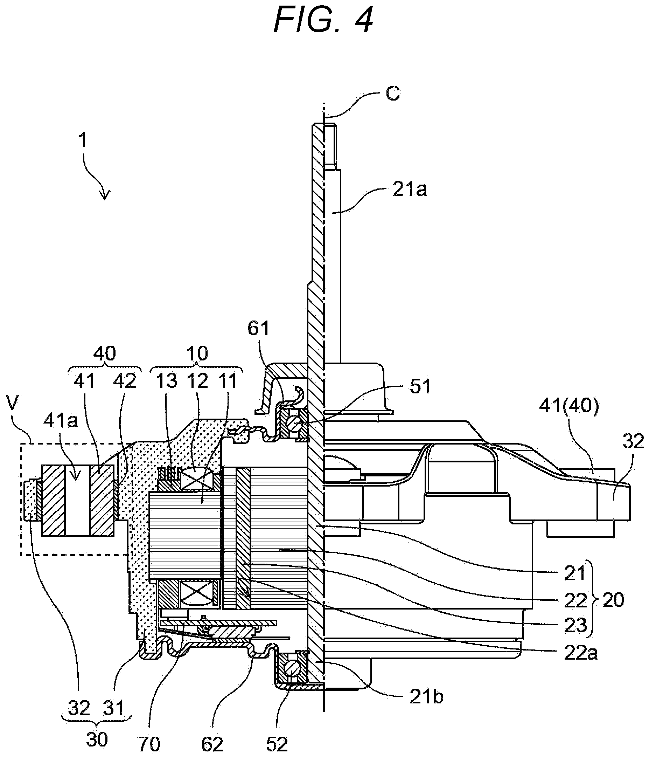

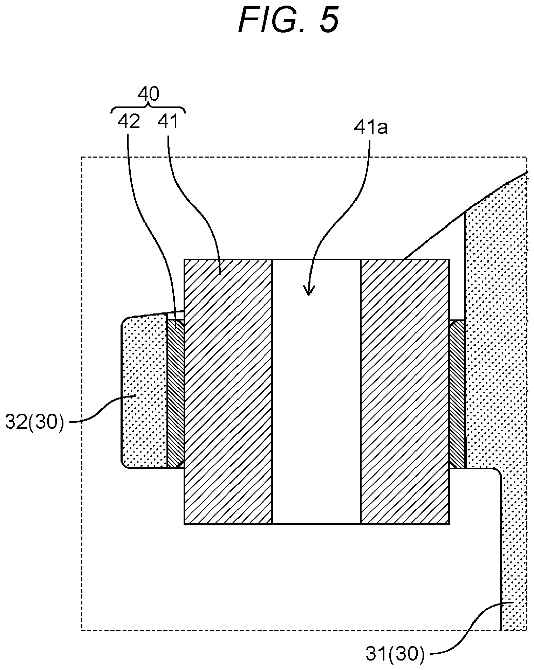

First, an overall configuration of mold motor 1 according to the exemplary embodiment will be described with reference to Figs. 1 to 5. Fig. 1 is a perspective view of mold motor 1 according to the exemplary embodiment as viewed obliquely from above. Fig. 2 is a perspective view of mold motor 1 as viewed obliquely from below. Fig. 3 is a top view of mold motor 1. Fig. 4 is a cross-sectional view of mold motor 1. Fig. 5 is an enlarged view of region V surrounded by a broken line in Fig. 4.

As illustrated in Figs. 1 to 4, mold motor 1 includes stator 10, rotor 20, mold resin 30, and attachment member 40. Rotor 20 rotates by the magnetic force of stator 10. Mold resin 30 covers at least a part of stator 10. Attachment member 40 is a member for installing mold motor 1 onto an installation object. Mold motor 1 is attached to the installation object (attachment object) via attachment member 40.

Mold motor 1 further includes first bearing 51, second bearing 52, first bracket 61, and second bracket 62. In mold motor 1, mold resin 30 and second bracket 62 constitute an outline of mold motor 1.

Mold motor 1 is a brushless motor for which no brush is used. Mold motor 1 is an inner rotor type motor in which rotor 20 is disposed inside stator 10.

Mold motor 1 configured as described above is used, for example, as a fan motor mounted on an outdoor unit of an air conditioner. When mold motor 1 is used as a fan motor, a rotary fan is attached to rotating shaft 21 of mold motor 1. In this case, the installation object of mold motor 1 is the body of the outdoor unit of the air conditioner, and mold motor 1 is attached to the body (for example, frame) of the outdoor unit of the air conditioner via attachment member 40.

Hereinafter, each component of mold motor 1 will be described in detail.

As illustrated in Fig. 4, stator 10 is disposed to oppose rotor 20 with a minute air gap interposed between the stator and rotor 20. Specifically, stator 10 is disposed so as to surround rotor core 22 of rotor 20.

Stator 10 includes stator core 11, coil 12, and insulator 13.

Stator core 11 serves as a core of stator 10. Stator core 11 generates a magnetic force for rotating rotor 20. Stator core 11 is, for example, a stacked body in which a plurality of electromagnetic steel sheets are stacked in a direction in which axial center C of rotating shaft 21 of rotor 20 extends. Note that stator core 11 is not limited to the stacked body, and may be a bulk body made of a magnetic material.

Stator core 11 includes a yoke formed in an annular shape so as to surround rotor 20 and a plurality of teeth protruding from the yoke toward rotating shaft 21. The yoke is a back yoke formed outside each tooth. Each of the plurality of teeth protruding toward rotating shaft 21 faces rotor core 22 of rotor 20. The plurality of teeth radially extend in a direction (radial direction) orthogonal to axial center C of rotating shaft 21. The plurality of teeth are arranged at equal intervals along the rotation direction of rotating shaft 21 while forming a slot between two adjacent teeth.

The plurality of coils 12 are armature windings of stator 10, and are wound around stator core 11. Coil 12 is a winding coil wound around stator core 11 via insulator 13. As an example, coil 12 is a concentrated winding coil wound around each of a plurality of teeth included in stator core 11, and is housed in a slot of stator core 11. Note that coil 12 is not limited to concentrated winding, and may be distributed winding.

Coil 12 has a three-phase winding so as to be able to rotate rotor 20 as a three-phase synchronous motor. Specifically, coil 12 includes unit coils of three phases of a U phase, a V phase, and a W phase electrically different from one another by 120 degrees. That is, coil 12 wound around each of the teeth of stator core 11 is energized and driven by three-phase alternating current energized in units of phases of the U phase, the V phase, and the W phase. Due to this, a main magnetic flux as stator 10 is generated in each tooth of stator core 11. That is, each tooth around which coil 12 is wound is a magnetic pole tooth, and is an electromagnet that generates magnetic force by energizing coil 12.

The end of coil 12 of each phase is connected by a winding connection included in circuit board 70. In circuit board 70, pattern wiring for electrically connecting the plurality of coils 12 is formed for each phase of the U phase, the V phase, and the W phase. The end of coil 12 of each phase is electrically connected to the pattern wiring of circuit board 70 by solder or the like.

Insulator 13 is a coil bobbin. Insulator 13 has a frame-shaped frame body around which coil 12 is wound. The frame body of insulator 13 is an insulating frame that covers stator core 11. Specifically, the frame body of insulator 13 is provided so as to cover the teeth of stator core 11. Insulator 13 is provided in each of the plurality of teeth, but is not limited to this. Insulator 13 is made of, for example, an insulating resin material such as polybutylene terephthalate (PBT).

Stator 10 configured as described above generates a magnetic force acting on rotor 20 by a current flowing through coil 12. Specifically, stator 10 generates a magnetic flux on an air gap surface with rotor core 22 included in rotor 20 so that N poles and S poles are alternately present along the rotation direction (circumferential direction) of rotating shaft 21. The direction of the main magnetic flux generated by stator 10 is a direction (radial direction) orthogonal to axial center C of rotating shaft 21. Stator 10 constitutes a magnetic circuit together with rotor 20.

Next, rotor 20 will be described. Rotor 20 rotates by a magnetic force generated in stator 10. As illustrated in Fig. 4, rotor 20 includes rotating shaft 21. Rotor 20 rotates about axial center C of rotating shaft 21.

Rotor 20 is disposed to oppose stator 10. In the present exemplary embodiment, rotor 20 opposes stator 10 in a direction (radial direction) orthogonal to the direction in which axial center C of rotating shaft 21 extends.

Rotor 20 has a configuration in which a plurality of N poles and S poles are repeatedly present along the rotation direction of rotating shaft 21. Rotor 20 is an interior permanent magnet (IPM) rotor. Therefore, mold motor 1 is an IPM motor.

Specifically, rotor 20 includes rotating shaft 21, rotor core 22, and permanent magnet 23 inserted into each of a plurality of magnet insertion holes 22a formed in rotor core 22.

Rotor core 22 serves as a core of rotor 20. Rotor core 22 is a substantially columnar stacked body in which a plurality of electromagnetic steel sheets are stacked along the direction in which axial center C of rotating shaft 21 extends. Note that rotor core 22 is not limited to a stacked body including a plurality of steel plates, and may be a bulk body including a magnetic material.

The plurality of magnet insertion holes 22a formed in rotor core 22 exist at equal intervals along the rotation direction of rotating shaft 21. Each of the plurality of magnet insertion holes 22a penetrates rotor core 22 in the direction in which axial center C of rotating shaft 21 extends, but need not penetrate rotor core 22. Permanent magnet 23 is embedded in each magnet insertion hole 22a. Permanent magnet 23 is a sintered magnet, and one permanent magnet 23 is inserted into each magnet insertion hole 22a. Note that permanent magnet 23 may be a bonded magnet.

Rotating shaft 21 is fixed to the center of rotor core 22. Rotating shaft 21 is a shaft having axial center C. Rotating shaft 21 is an elongated rod-like member such as a metal rod. Axial center C of rotating shaft 21 serves as a rotation center when rotor 20 rotates. The longitudinal direction (extending direction) of rotating shaft 21 is a direction (axial direction) in which axial center C extends.

Rotating shaft 21 is fixed to rotor core 22 in a state of penetrating rotor core 22 so as to extend on both sides of rotor core 22 in a direction in which axial center C of rotating shaft 21 extends. Specifically, rotating shaft 21 is inserted into a through hole provided at the center of rotor core 22 and fixed to rotor core 22. Rotating shaft 21 is fixed to rotor core 22, for example, by being press-fitted or shrink-fitted into a through hole of rotor core 22. Rotating shaft 21 is rotatably supported by first bearing 51 and second bearing 52.

Rotor 20 configured as described above generates a magnetic force acting on stator 10. Similarly to stator 10, the orientation of the main magnetic flux generated by rotor 20 is a direction (radial direction) orthogonal to axial center C of rotating shaft 21. That is, the orientations of the magnetic fluxes generated by stator 10 and rotor 20 are both radial directions.

Rotor 20 rotates by a magnetic flux generated by rotor 20 itself and a magnetic flux generated by stator 10. Specifically, when electric power is supplied from circuit board 70 to coil 12 of stator 10, a field current flows through coil 12, and a magnetic flux is generated in stator core 11. A magnetic force generated by the interaction between the magnetic flux generated in stator core 11 and the magnetic flux generated from permanent magnet 23 included in rotor 20 becomes a torque for rotating rotor 20, and rotor 20 rotates.

Next, mold resin 30 will be described. As illustrated in Fig. 4, mold resin 30 covers stator 10. Mold resin 30 covers the outer portion of stator 10 over the entire circumference of stator 10. Specifically, mold resin 30 covers the outer portions of stator core 11, coil 12, and insulator 13. Mold resin 30 is in contact with the outer surfaces of coil 12 and insulator 13.

Mold resin 30 is made of an insulating resin material having excellent thermal conductivity, such as a polyester resin or an epoxy resin. Mold resin 30 is made of a thermosetting resin. In the present exemplary embodiment, mold resin 30 is made of unsaturated polyester that is a thermosetting resin. Specifically, mold resin 30 is made of white bulk molding compound (BMC) unsaturated polyester resin. The color of the BMC constituting mold resin 30 is not particularly limited, and may be another color, for example, black.

As illustrated in Figs. 1 to 4, mold resin 30 is a part of an outline of mold motor 1, and constitutes a housing. Specifically, as illustrated in Fig. 4, mold resin 30 covering stator 10 constitutes a housing enclosing rotor 20.

Mold resin 30 includes main body 31 constituting a trunk of mold motor 1 and protrusion 32 provided in main body 31. Protrusions 32 are provided in main body 31. Specifically, as illustrated in Figs. 1 to 3, main body 31 is provided with four protrusions 32. Note that main body 31 and protrusions 32 are integrally formed by molding to form one mold resin 30.

Main body 31 covers the outer portion of stator 10 over the entire circumference of stator 10. Specifically, main body 31 covers stator core 11, coil 12, and insulator 13. As illustrated in Fig. 4, main body 31 is a tubular body having an opening at each of one end and the other end in the direction in which axial center C of rotating shaft 21 extends.

As illustrated in Figs. 3 and 4, protrusion 32 protrudes outward in a direction (radial direction) orthogonal to a direction in which axial center C of rotating shaft 21 extends. Specifically, each of the plurality of protrusions 32 protrudes in a protruding shape from the outer surface of main body 31. As illustrated in Fig. 4, the plurality of protrusions 32 radially extend in a direction (radial direction) orthogonal to axial center C of rotating shaft 21 in top view. The plurality of protrusions 32 are provided at equal intervals along the rotation direction of rotating shaft 21. Specifically, four protrusions 32 are provided at intervals of 90 degrees along the rotation direction of rotating shaft 21.

Protrusion 32 is a leg of mold motor 1, and functions as an attachment part for attaching mold motor 1 to an installation object. Mold motor 1 is attached to an installation object via attachment member 40 fixed to each protrusion 32.

Next, attachment member 40 will be described. Attachment member 40 is a component for installing mold motor 1 onto an installation object. The installation object on which mold motor 1 is installed is a rigid body made of a metal material, a resin material, or the like. For example, when mold motor 1 is installed in a fan motor of an outdoor unit of an air conditioner, mold motor 1 of the fan motor is installed in the body of the outdoor unit that is the installation object.

As illustrated in Figs. 1 to 4, attachment member 40 is fixed to mold resin 30. Attachment member 40 is fixed to mold resin 30 by integral molding. In the present exemplary embodiment, as illustrated in Fig. 5, attachment member 40 is fixed to protrusion 32 in a state where a part of attachment member 40 is embedded in protrusion 32 of mold resin 30.

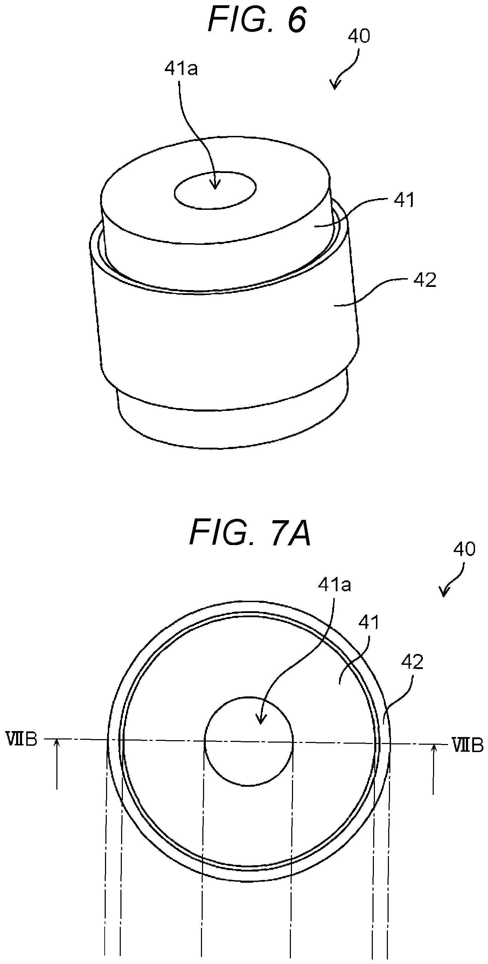

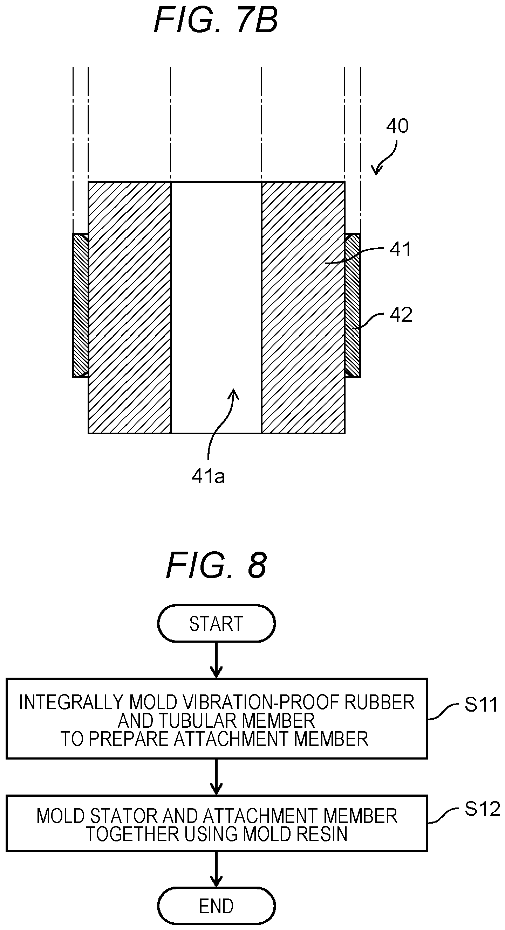

Attachment member 40 includes vibration-proof rubber 41, which is an elastic body, and tubular member 42 disposed around vibration-proof rubber 41. Vibration-proof rubber 41 is attached to the installation object on which mold motor 1 is installed. Fig. 6 is a perspective view of attachment member 40 in mold motor 1 according to the exemplary embodiment. Fig. 7A is a top view of attachment member 40. Fig. 7B is a cross-sectional view taken along line VIIB-VIIB in Fig. 7A. As illustrated in Figs. 6, 7A, and 7B, attachment member 40 is a component in which vibration-proof rubber 41 and tubular member 42 are integrated. Before attachment member 40 is fixed to mold resin 30, vibration-proof rubber 41 and tubular member 42 are integrally molded by resin molding.

Vibration-proof rubber 41, which is an elastic body, has a function of absorbing or attenuating vibration of mold motor 1 so that the vibration of mold motor 1 is not transmitted to the installation object. That is, vibration-proof rubber 41 suppresses transmission of vibration generated in mold motor 1 to the installation object. Specifically, vibration-proof rubber 41, which is an elastic body, is made of an elastomer having rubber elasticity. As an example, vibration-proof rubber 41 is made of a rubber material such as ethylene propylene rubber (EPM), ethylene propylene dene rubber (EPDM), and ethylene propylene (EP), or nitrile rubber (NBR). EPM is a copolymer of ethylene and propylene as the ethylene propylene rubber, and EPDM is a terpolymer containing a smaller amount of the third component in addition to ethylene and propylene.

As illustrated in Figs. 6, 7A, and 7B, vibration-proof rubber 41 is provided with insertion hole 41a through which a screw, a bolt, or the like (hereinafter, referred to as "screw or the like"), which is a fixing member for attaching mold motor 1 to the installation object, is inserted. The shape of vibration-proof rubber 41 is a thick tubular member having a large thickness. Vibration-proof rubber 41 has a cylindrical shape. As an example, the thickness of vibration-proof rubber 41 in the radial direction is substantially the same as the diameter of insertion hole 41a, but is not limited to this. From the viewpoint of suppressing vibration of mold motor 1, the thickness of vibration-proof rubber 41 in the radial direction is preferably larger than the diameter of insertion hole 41a. A screw or the like as a fixing member is selected in a state of an attachment portion of an installation object to which mold motor 1 is attached, for example, a frame. Specifically, if a female screw is formed in the frame, a screw can be used as the fixing member. When a through hole is formed in the frame, a bolt and a nut can be used as the fixing member.

Tubular member 42 is disposed outside vibration-proof rubber 41 so as to surround vibration-proof rubber 41. Tubular member 42 has a shape corresponding to the outer shape of vibration-proof rubber 41. In this case, the shape of tubular member 42 and the shape of vibration-proof rubber 41 are preferably similar to each other. Since vibration-proof rubber 41 has a cylindrical shape, tubular member 42 also has a cylindrical shape. Tubular member 42 is disposed such that the inner surface of tubular member 42 and the outer surface of vibration-proof rubber 41 are in contact with each other. Therefore, the inner diameter of tubular member 42 and the outer diameter of vibration-proof rubber 41 are the same.

Although the height of tubular member 42 is lower than the height of vibration-proof rubber 41, the present invention is not limited to this. For example, the height of tubular member 42 and the height of vibration-proof rubber 41 may be the same. The shape of vibration-proof rubber 41 and the shape of tubular member 42 need not be a circular shape, and may be a square tubular shape including a polygon such as a quadrangle. The shape of vibration-proof rubber 41 and the shape of tubular member 42 need not be the same or may be different. Tubular member 42 is a ring member. Therefore, the shape of tubular member 42 in top view is a closed ring shape, but may be a C shape. That is, the side wall of tubular member 42 may be provided with a slit. There may be a step on the surface of tubular member 42, or a hole may be formed in a part of the side wall of tubular member 42.

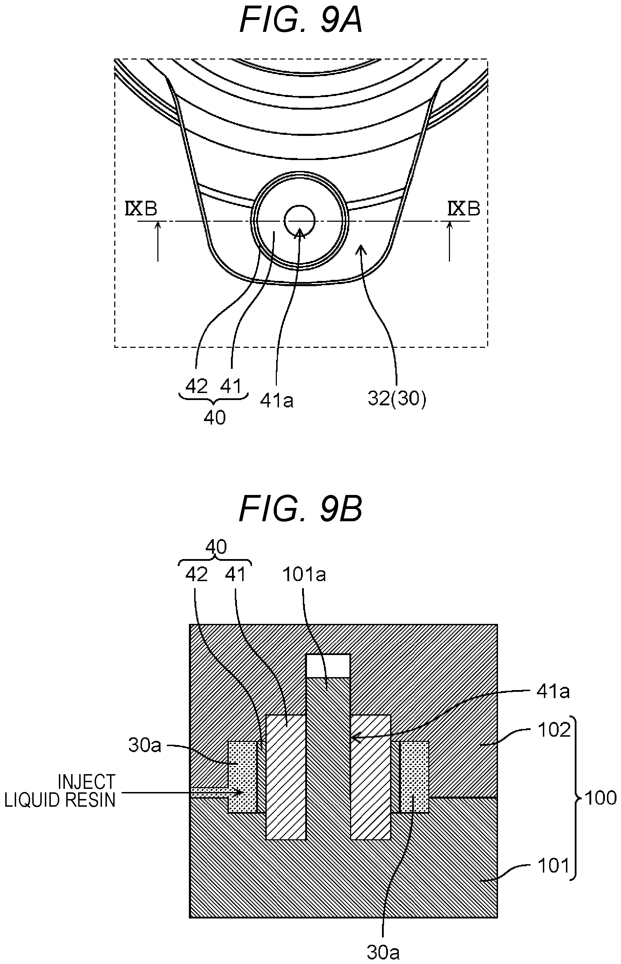

Tubular member 42 is a hard member harder than vibration-proof rubber 41. That is, the hardness of tubular member 42 is harder than the hardness of vibration-proof rubber 41. Tubular member 42 is made of a metal material. As an example, tubular member 42 is an iron cylindrical tube formed of an iron-based material. Note that the material of tubular member 42 is not limited to a metal material as long as the material is harder than vibration-proof rubber 41, and may be made of a ceramic material, a hard resin material, or the like. Tubular member 42 is only required to be made of a material that can sufficiently withstand the maximum injection pressure (for example, about 100 MP) of liquid resin 30a (see Fig. 9B) injected at the time of molding mold resin 30.

The hardness of tubular member 42 and the hardness of vibration-proof rubber 41 can be evaluated on the basis of an index such as durometer hardness, Vickers hardness, or Shore hardness. The hardness of tubular member 42 and the hardness of vibration-proof rubber 41 may be evaluated by the elastic modulus (Young's modulus) of the material constituting tubular member 42 and vibration-proof rubber 41. For example, when the elastic modulus (Young's modulus) of tubular member 42 is larger than the elastic modulus (Young's modulus) of vibration-proof rubber 41, the hardness of tubular member 42 is harder than the hardness of vibration-proof rubber 41.

As an example, vibration-proof rubber 41 is made of EPDM having durometer hardness of rubber hardness 35. The material of tubular member 42 is iron.

As illustrated in Figs. 4 and 5, vibration-proof rubber 41 and tubular member 42 are fixed to mold resin 30 by integral molding. That is, vibration-proof rubber 41 and tubular member 42 are structured not to be detached from mold resin 30. Therefore, vibration-proof rubber 41 and tubular member 42 cannot be removed from mold resin 30.

Vibration-proof rubber 41 and tubular member 42 are disposed on protrusion 32 of mold resin 30. That is, vibration-proof rubber 41 and tubular member 42 are fixed to protrusion 32 of mold resin 30 by integral molding. Specifically, vibration-proof rubber 41 and tubular member 42 are fixed to mold resin 30 as attachment member 40 as described above.

Vibration-proof rubber 41 is embedded in protrusion 32 such that the upper end and the lower end in the axial direction are exposed. That is, in vibration-proof rubber 41, the upper end top surface, the upper end outer peripheral side surface, the lower end bottom surface, and the lower end outer peripheral side surface are exposed. On the other hand, tubular member 42 is embedded in protrusion 32 without exposing the entire outer peripheral side surface. The upper end top surface of tubular member 42 is present at a position recessed from the outer surface of protrusion 32, and the lower end bottom surface of tubular member 42 is flush with the outer surface of protrusion 32.

Next, first bearing 51, second bearing 52, first bracket 61, and second bracket 62 will be described.

As illustrated in Fig. 4, first bearing 51 and second bearing 52 rotatably support rotating shaft 21. Specifically, first portion 21a of rotating shaft 21 protruding to one side from rotor core 22 is supported by first bearing 51. On the other hand, second portion 21b of rotating shaft 21 protruding from rotor core 22 to the other side is supported by second bearing 52. As an example, first bearing 51 and second bearing 52 are bearings such as ball bearings.

In the present exemplary embodiment, first portion 21a of rotating shaft 21 is an output shaft, and protrudes from first bearing 51 and first bracket 61. A load such as a rotary fan is attached to first portion 21a of rotating shaft 21. Second portion 21b of rotating shaft 21 is a counter output shaft and does not protrude from second bearing 52 and second bracket 62.

First bracket 61 retains first bearing 51. First bearing 51 is fixed to a recess of first bracket 61. Second bracket 62 retains second bearing 52. Second bearing 52 is fixed to second bracket 62.

First bracket 61 is provided at one end of mold resin 30 in the direction in which axial center C of rotating shaft 21 extends. Specifically, first bracket 61 is disposed so as to close the opening on one end side of main body 31 of mold resin 30.

Second bracket 62 is provided at the other end of mold resin 30 in the direction in which axial center C of rotating shaft 21 extends. Specifically, second bracket 62 is disposed so as to close the opening on the other end side of main body 31 of mold resin 30.

The entire outer diameter of first bracket 61 is smaller than the entire outer diameter of second bracket 62. That is, the outer size of second bracket 62 is larger than that of first bracket 61.

First bracket 61 and second bracket 62 are made of a metal material such as iron. For example, first bracket 61 and second bracket 62 are made of a metal plate having a constant thickness. First bracket 61 and second bracket 62 are fixed to mold resin 30. Specifically, first bracket 61 is fixed to mold resin 30 together with stator 10 when stator 10 is molded by resin. On the other hand, second bracket 62 is fixed to mold resin 30 after molded.

As described above, mold motor 1 of the present exemplary embodiment includes stator 10, rotor 20 rotating by the magnetic force of stator 10, mold resin 30 covering at least a part of stator 10, elastic body 41 attached to an installation object on which mold motor 1 is installed, and one or more hard members disposed around elastic body 41 and harder than elastic body 41, and elastic body 41 and the hard members are fixed to mold resin 30 by integral molding.

Accordingly, even when mold motor 1 is installed on the installation object using elastic body 41, it is possible to prevent mold motor 1 from falling off from the installation obj ect.

Next, the manufacturing method for mold motor 1 will be described with reference to Figs. 8, 9A, and 9B. In particular, a method of fixing attachment member 40 to mold resin 30 will be mainly described below. Fig. 8 is a flowchart of the manufacturing method for mold motor 1 according to the exemplary embodiment. Figs. 9A and 9B are views for explaining the method for fixing attachment member 40 to mold resin 30 in the manufacturing method for mold motor 1. Fig. 9A is an enlarged view of protrusion 32 of mold resin 30 in mold motor 1 after completed. Fig. 9B is a view illustrating a state when mold resin 30 is molded by mold 100 in a cross section taken along line IXB-IXB in Fig. 9A.

First, attachment member 40 having the structure illustrated in Figs. 6, 7A, and 7B is separately prepared. Specifically, as illustrated in Fig. 8, attachment member 40 is prepared by integrally molding vibration-proof rubber 41 and tubular member 42 (step S11). Attachment member 40 can be prepared by, for example, insert molding. In this case, metal tubular member 42 is disposed in a mold for resin molding, and a liquid resin of a resin material constituting vibration-proof rubber 41 is injected into the mold and cured, whereby attachment member 40 in which tubular member 42 is fixed to vibration-proof rubber 41 can be prepared by integral molding.

Next, as illustrated in Fig. 8, attachment member 40 and stator 10 are molded together with mold resin 30 (step S12). As a result, mold resin 30 in which attachment member 40 and stator 10 are fixed can be prepared by integral molding.

Specifically, first, stator 10 having stator core 11 around which coil 12 is wound via insulator 13 and attachment member 40 are disposed in mold 100 of the injection molding machine as illustrated in Fig. 9B. At this time, first bracket 61 is also disposed on mold 100.

Mold 100 includes a plurality of blocks. For example, when a horizontal injection molding machine is used, as illustrated in Fig. 9B, mold 100 is configured to be opened and closed in the vertical direction by first block 101 as a lower mold and second block 102 as an upper mold. In this case, by inserting projection 101a of first block 101 into insertion hole 41a formed in vibration-proof rubber 41 of attachment member 40, attachment member 40 is disposed in mold 100. The diameter of projection 101a is the same as the inner diameter of insertion hole 41a of vibration-proof rubber 41, and projection 101a inserted into insertion hole 41a of vibration-proof rubber 41 is in close contact with vibration-proof rubber 41.

Subsequently, liquid resin 30a that is a resin material constituting mold resin 30 is injected into mold 100 through a gate provided in mold 100. At this time, since tubular member 42 surrounds vibration-proof rubber 41, when liquid resin 30a is injected from the outside of attachment member 40, liquid resin 30a flows into mold 100 without directly contact with the outer peripheral surface of vibration-proof rubber 41. Specifically, liquid resin 30a injected into mold 100 is filled in mold 100 while being in contact with the outer surface of tubular member 42 surrounding vibration-proof rubber 41. As described above, since tubular member 42 is disposed outside vibration-proof rubber 41, the injection pressure of liquid resin 30a can be received by tubular member 42, and the injection pressure of liquid resin 30a can be prevented from being applied to vibration-proof rubber 41. This makes it possible to suppress deformation of vibration-proof rubber 41 due to the injection pressure of liquid resin 30a.

When liquid resin 30a is injected into mold 100, projection 101a of first block 101 is inserted into insertion hole 41a formed in vibration-proof rubber 41 as described above. Due to this, since vibration-proof rubber 41 is supported by projection 101a, it is possible to further suppress deformation of vibration-proof rubber 41 in mold 100 at the time of molding mold resin 30.

After filling mold 100 with liquid resin 30a, liquid resin 30a is cured. Due to this, stator 10, attachment member 40, and first bracket 61 are fixed to mold resin 30 by integral molding.

Noted that, after that, mold motor 1 is completed by assembling other components such as rotor 20 to stator 10 covered with mold resin 30.

Next, characteristics of mold motor 1 according to the present exemplary embodiment will be described, including the background leading to the technique of the present disclosure.

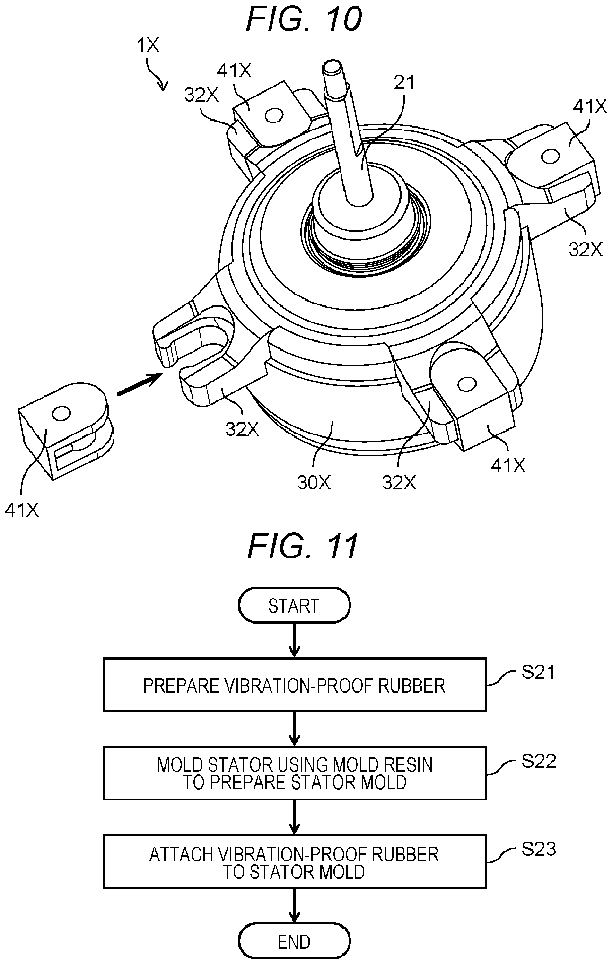

Fig. 10 is a perspective view illustrating the configuration of a conventional mold motor. Conventionally, when a fan motor having a mold motor is installed on an installation object, the fan motor is installed on the installation object with a vibration-proof rubber interposed so that vibration generated by the fan motor is not transmitted to the installation object.

In this case, as illustrated in Fig. 10, in conventional mold motor 1X, after the stator is covered with mold resin 30X to complete the stator mold, vibration-proof rubber 41X is attached to protrusion 32X (leg) of mold resin 30X. Fig. 11 is a flowchart of a manufacturing method for a conventional mold motor. Specifically, as illustrated in Fig. 11, vibration-proof rubber 41X is prepared by resin molding (step S21). The stator is molded with mold resin 30X to prepare a stator mold (step S22). Vibration-proof rubber 41X is attached to the stator mold (step S23). In this case, as illustrated in Fig. 10, vibration-proof rubber 41X is laterally inserted into protrusion 32X of mold resin 30X to attach vibration-proof rubber 41X to mold resin 30X. That is, vibration-proof rubber 41X is retrofitted to mold resin 30X.

As described above, when a fan motor including mold motor 1X in which vibration-proof rubber 41X is retrofitted to mold resin 30X is installed in the installation object, there is a concern about occurrence of an event in which the fan motor falls off the installation object due to a typhoon, an earthquake, or the like.

Therefore, it is conceivable to fix vibration-proof rubber 41X to mold resin 30X by integral molding. That is, when the stator is molded with mold resin 30X, it is conceivable that vibration-proof rubber 41X is also molded with mold resin 30X together with the stator.

However, when vibration-proof rubber 41X was actually integrally molded with mold resin 30X, it has been found that vibration-proof rubber 41X is deformed. Specifically, it has been found that vibration-proof rubber 41X is deformed by the injection pressure when the liquid resin of the resin material constituting mold resin 30X is injected into the mold.

As a result of intensive studies on this problem, the inventors of the present application have obtained an idea of arranging one or more hard members harder than the vibration-proof rubber around the vibration-proof rubber and fixing the vibration-proof rubber and the hard members to the mold resin by integral molding when integrally molding the vibration-proof rubber with the mold resin.

Mold motor 1 according to the present disclosure has been made based on this idea. Specifically, mold motor 1 includes vibration-proof rubber 41 attached to an installation object on which mold motor 1 is installed, and a hard member harder than vibration-proof rubber 41. One or more hard members are disposed around vibration-proof rubber 41. Vibration-proof rubber 41 and the hard members are fixed to mold resin 30 by integral molding. Mold motor 1 includes tubular member 42 as a hard member disposed around vibration-proof rubber 41.

In this manner, tubular member 42 is disposed as a hard member harder than vibration-proof rubber 41 around vibration-proof rubber 41. As a result, even when vibration-proof rubber 41 is integrally molded with mold resin 30, it is possible to suppress deformation of vibration-proof rubber 41 due to the injection pressure of liquid resin 30a for molding mold resin 30.

In particular, in the present exemplary embodiment, tubular member 42 is disposed outside vibration-proof rubber 41 so as to surround vibration-proof rubber 41.

With this configuration, as illustrated in Fig. 9B, when liquid resin 30a is injected from the outside of vibration-proof rubber 41, the injection pressure of liquid resin 30a can be received by tubular member 42 surrounding the outside of vibration-proof rubber 41. It is possible to prevent the injection pressure of liquid resin 30a from being applied to vibration-proof rubber 41. This makes it possible to effectively suppress deformation of vibration-proof rubber 41 due to the injection pressure of liquid resin 30a.

Mold resin 30 has protrusion 32 protruding outward in a radial direction that is a direction orthogonal to the direction (axial direction) in which axial center C of rotating shaft 21 extends. Vibration-proof rubber 41 and tubular member 42, which is a hard member, are disposed in protrusion 32. That is, vibration-proof rubber 41 and tubular member 42 are fixed to protrusion 32 of mold resin 30 by integral molding.

With this configuration, mold motor 1 can be installed on the installation object using protrusion 32 of mold resin 30. That is, mold motor 1 can be attached to the installation object via vibration-proof rubber 41 fixed to protrusion 32. Therefore, mold motor 1 can be easily attached to the installation object.

Specifically, vibration-proof rubber 41 is provided with insertion hole 41a through which a screw or the like for attaching mold motor 1 to the installation object is inserted. Thus, a screw or the like is inserted into insertion hole 41a formed in vibration-proof rubber 41, and mold motor 1 can be easily attached to the installation object by screwing.

In the present exemplary embodiment, vibration-proof rubber 41 is made of ethylene propylene rubber or nitrile rubber.

Thus, vibration of mold motor 1 can be effectively absorbed by vibration-proof rubber 41. Therefore, it is possible to effectively suppress transmission of vibration of mold motor 1 to the installation object. For example, although mold motor 1 has a vibration displacement of 20 µm to 30 µm, vibration of such a vibration displacement can be effectively absorbed by vibration-proof rubber 41.

Moreover, the heatproof temperature of the ethylene propylene rubber or the nitrile rubber is 150 °C or less. Specifically, the heatproof temperature (maximum specification temperature) of the ethylene propylene rubber is 150 °C. The heatproof temperature (maximum specification temperature) of the nitrile rubber is 130 °C. Therefore, since vibration-proof rubber 41 is made of ethylene propylene rubber or nitrile rubber, the molding temperature of liquid resin 30a when mold resin 30 is molded can be allowed up to 150 °C.

For example, the molding temperature at the time of resin molding using an unsaturated polyester resin is 150 °C. Therefore, since mold resin 30 is made of an unsaturated polyester resin, vibration-proof rubber 41 can be made of ethylene propylene rubber or nitrile rubber.

As described above, according to mold motor 1 according to the present exemplary embodiment, since vibration-proof rubber 41 and tubular member 42 are fixed to mold resin 30 by integral molding, vibration-proof rubber 41 is not detached from mold resin 30. Due to this, even when mold motor 1 is installed on the installation object using vibration-proof rubber 41 for reducing noise, mold motor 1 can be suppressed from falling off from the installation object.

For example, when a fan motor including mold motor 1 is installed in the body of an outdoor unit of an air conditioner with vibration-proof rubber 41 interposed, the fan motor can be suppressed from falling off from the body of the outdoor unit even when a strong wind such as a typhoon or an earthquake occurs. That is, it is possible to achieve a fan motor that can achieve both noise reduction by vibration-proof rubber 41 and prevention of falling off from the installation object.

### (Modifications)

Mold motor 1 according to the present disclosure has been described above on the basis of the exemplary embodiment. However, the present disclosure is not limited to the above exemplary embodiments.

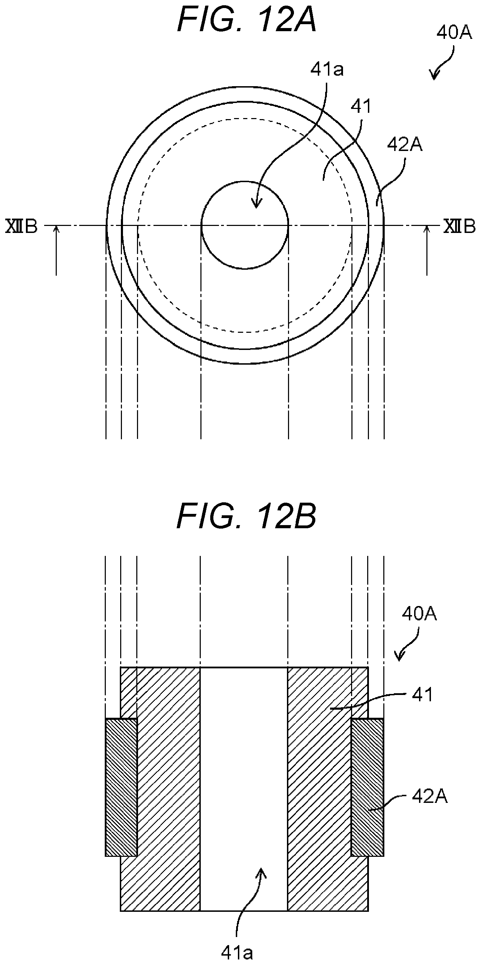

For example, in attachment member 40 in the above exemplary embodiments, the inner diameter of tubular member 42 and the outer diameter of vibration-proof rubber 41 are substantially the same. However, the present disclosure is not limited to this. Fig. 12A is a top view of attachment member 40A according to the first modification. Fig. 12B is a cross-sectional view taken along line XIIB-XIIB in Fig. 12A. For example, as in attachment member 40A illustrated in Figs. 12A and 12B, the inner diameter of tubular member 42A may be smaller than the outer diameter of vibration-proof rubber 41 in a portion where tubular member 42A and vibration-proof rubber 41 are in contact with each other. That is, a part of tubular member 42A in the thickness direction may be embedded in vibration-proof rubber 41.

As in attachment member 40A according to the present modification, since a part of tubular member 42A is embedded in vibration-proof rubber 41, tubular member 42A is less likely to be displaced in the axial direction (vertical direction) of tubular member 42A. Since a part of tubular member 42A is embedded in vibration-proof rubber 41, a contact area between tubular member 42A and vibration-proof rubber 41 can be increased as compared with a case where a part of tubular member 42A is not embedded in vibration-proof rubber 41. Due to this, when the mold motor in which attachment member 40A is fixed to the mold resin is screwed to the installation object by inserting a screw or the like into insertion hole 41a formed in attachment member 40A, idling of tubular member 42A can be suppressed.

Not only a part of tubular member 42A in the thickness direction but also entire tubular member 42A in the thickness direction may be embedded in vibration-proof rubber 41. That is, the outer surface of tubular member 42A may be exposed, and the outer diameter of tubular member 42A and the outer diameter of vibration-proof rubber 41 may be the same. Tubular member 42A is embedded in vibration-proof rubber 41 on the entire circumference in the circumferential direction. However, the present disclosure is not limited to this. A part in the circumferential direction may be embedded in vibration-proof rubber 41. For example, a plurality of projections may be provided on the inner surface of tubular member 42A along the circumferential direction, and only the plurality of projections may be embedded in vibration-proof rubber 41.

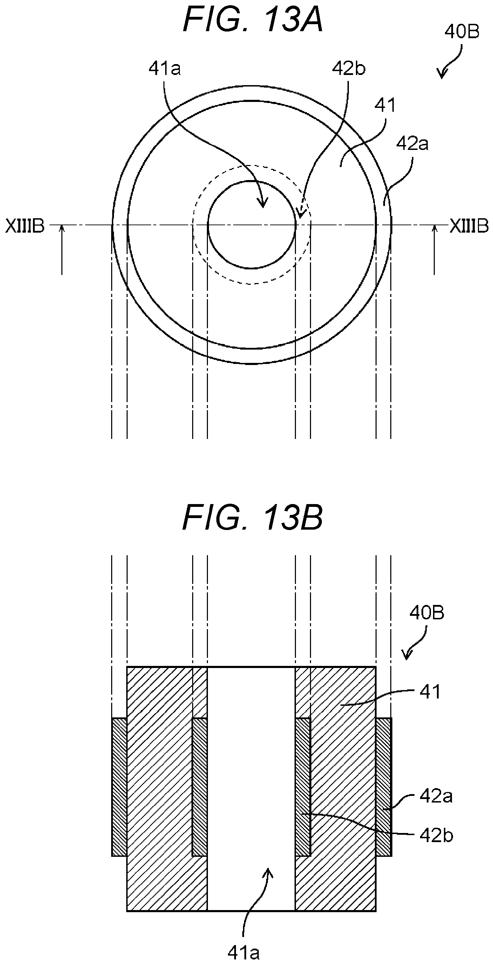

In the above-mentioned exemplary embodiments, attachment member 40 has one tubular member. However, the present disclosure is not limited to this. For example, attachment member 40 may have a plurality of tubular members. Specifically, as in attachment member 40B illustrated in Figs. 13A and 13B, first tubular member 42a and second tubular member 42b may be provided as hard members harder than vibration-proof rubber 41. Fig. 13A is a top view of attachment member 40B according to the second modification. Fig. 13B is a cross-sectional view taken along line XIIIB-XIIIB in Fig. 13A.

In attachment member 40B, first tubular member 42a is disposed outside vibration-proof rubber 41 so as to surround vibration-proof rubber 41. Second tubular member 42b is disposed inside vibration-proof rubber 41. That is, first tubular member 42a is an outer tube. Second tubular member 42b is an inner tube.

Specifically, first tubular member 42a is the same as tubular member 42 of attachment member 40 in the above exemplary embodiments. First tubular member 42a is fixed to vibration-proof rubber 41 in the same manner as attachment member 40 in the above exemplary embodiments. Therefore, first tubular member 42a is an iron cylindrical tube, and is disposed such that the inner surface of first tubular member 42a is in contact with the outer surface of vibration-proof rubber 41.

Second tubular member 42b is made of a metal material, a ceramic material, a hard resin material, or the like. As an example, second tubular member 42b is an iron cylindrical tube similarly to first tubular member 42a. Second tubular member 42b and first tubular member 42a have the same shape (both are cylindrical). However, the shapes may be different from each other. Second tubular member 42b and first tubular member 42a are made of the same material (both made of iron). However, different materials may be used.

Entire second tubular member 42b in the thickness direction of second tubular member 42b is embedded in vibration-proof rubber 41. That is, the inner diameter of second tubular member 42b and the inner diameter of vibration-proof rubber 41 are the same, the inner surface of second tubular member 42b is exposed, and the inner surface of second tubular member 42b and the inner surface of vibration-proof rubber 41 are flush with each other. Therefore, in attachment member 40B, the through hole of second tubular member 42b serves as an attachment hole (screw insertion hole) when the mold motor is attached to the installation object.

As described above, attachment member 40B in the present modification has a configuration in which vibration-proof rubber 41 is held between first tubular member 42a and second tubular member 42b. Specifically, attachment member 40B has a configuration in which second tubular member 42b is added to attachment member 40 in the above exemplary embodiments.

This configuration can suppress deformation of vibration-proof rubber 41 due to the injection pressure of liquid resin 30a at the time of molding of mold resin 30 by first tubular member 42a. Since the through hole of second tubular member 42b serves as an attachment hole, the dimensional accuracy of the attachment hole of attachment member 40B can be increased. Therefore, rattling when attachment member 40B and the installation object are screwed can be eliminated, and therefore the mold motor can be stably fixed to the installation object. This further suppresses the mold motor from falling off the installation object.

Entire second tubular member 42b in the thickness direction needs not be embedded in vibration-proof rubber 41. For example, a part of second tubular member 42b in the thickness direction may be embedded in vibration-proof rubber 41. Alternatively, entire second tubular member 42b in the thickness direction needs not be embedded. A part or the entirety of first tubular member 42a in the thickness direction may be embedded in vibration-proof rubber 41. Thus, at least one of first tubular member 42a and second tubular member 42b may be partially embedded in vibration-proof rubber 41.

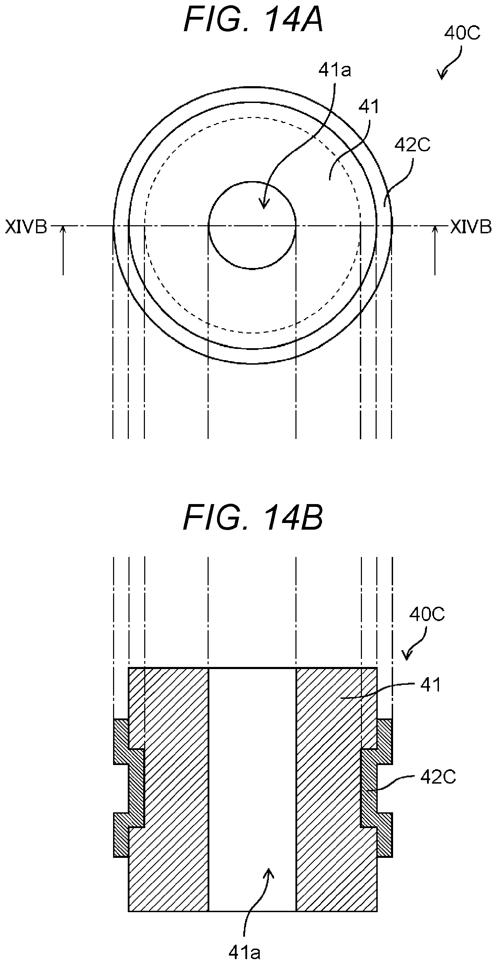

In attachment member 40 in the above exemplary embodiments, tubular member 42 has a tubular shape having no step on the surface, but the present disclosure is not limited to this. Fig. 14A is a top view of attachment member 40C according to the third modification. Fig. 14B is a cross-sectional view taken along line XIVB-XIVB in Fig. 14A. For example, as in attachment member 40C illustrated in Figs. 14A and 14B, tubular member 42C may have a stepped tubular shape. In this case, a stepped portion may be formed so that a part of tubular member 42C protrudes toward vibration-proof rubber 41, and this stepped portion is preferably embedded in vibration-proof rubber 41.

As in attachment member 40C according to the present modification, since the stepped portion of tubular member 42C is embedded in vibration-proof rubber 41, tubular member 42C is less likely to be displaced in the axial direction (vertical direction) of tubular member 42C. The stepped portion is configured to be caught by vibration-proof rubber 41. Therefore, tubular member 42C can also be suppressed from idling when a screw or the like is inserted into insertion hole 41a formed in attachment member 40C to screw the mold motor to the installation object.

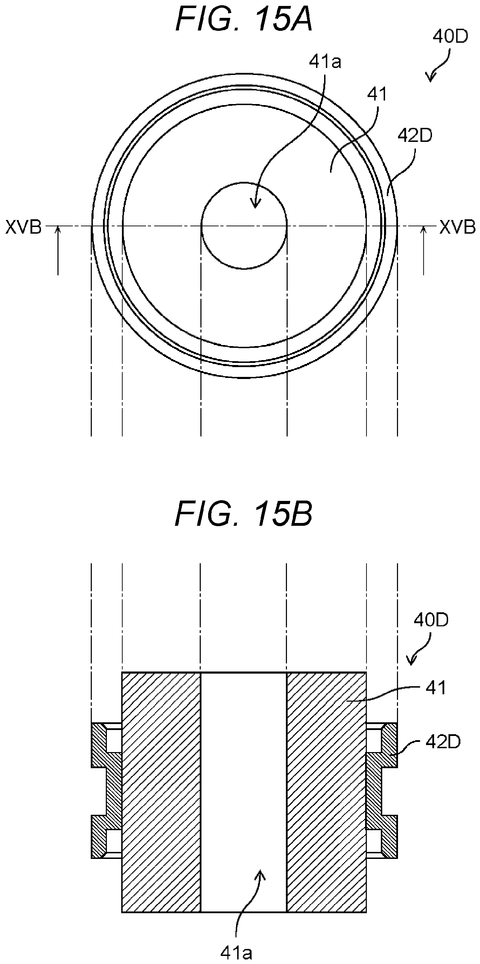

Fig. 15A is a top view of attachment member 40D according to the fourth modification. Fig. 15B is a cross-sectional view taken along line XVB-XVB of Fig. 15A. As in attachment member 40D illustrated in Figs. 15A and 15B, tubular member 42D may be fixed to vibration-proof rubber 41 without embedding the stepped portion of stepped tubular member 42D into vibration-proof rubber 41. With this configuration, tubular member 42D can be reliably held by mold 100 at the time of molding mold resin 30, and the positioning accuracy of tubular member 42D can be improved.

In attachment member 40 in the above exemplary embodiments, the hard member disposed around vibration-proof rubber 41 is tubular member 42. However, the present disclosure is not limited to this. That is, the shape of the hard member disposed around vibration-proof rubber 41 needs not be a tubular shape. That is, the hard member disposed around vibration-proof rubber 41 may be made of a material harder than vibration-proof rubber 41, and is only required to be any material as long as the injection pressure of liquid resin 30a can be suppressed from being applied to vibration-proof rubber 41 when vibration-proof rubber 41 is fixed to mold resin 30 by molding.

In the above-described exemplary embodiments, tubular member 42 has a cylindrical shape or a square cylindrical shape, and the outer shape of tubular member 42 in top view is a circle or a polygon. However, the present disclosure is not limited to this. For example, tubular member 42 may have a tubular shape in which the outer diameter shape in top view is a star shape or the like.

In the exemplary embodiments described above, rotor 20 is an IPM rotor. However, the present disclosure is not limited to this. For example, when a permanent magnet type rotor is used as rotor 20, rotor 20 may be a surface magnet type rotor (SPM rotor) in which a plurality of permanent magnets are provided on the outer surface of the rotor core.

In the exemplary embodiments described above, mold motor 1 is used as a fan motor, but the present disclosure is not limited to this. Mold motor 1 can also be applied to apparatuses other than the fan motor. That is, the load attached to rotating shaft 21 of mold motor 1 is not limited to a rotary fan.

### INDUSTRIAL APPLICABILITY

The mold motor of the present disclosure can be used for apparatuses in various fields including a fan motor used for air conditioning apparatuses such as an air conditioner.

### REFERENCE MARKS IN THE DRAWINGS

- 1: mold motor
- 10: stator
- 11: stator core
- 12: coil
- 13: insulator
- 20: rotor
- 21: rotating shaft
- 21a: first portion
- 21b: second portion
- 22: rotor core
- 22a: magnet insertion hole
- 23: permanent magnet
- 30: mold resin
- 30a: liquid resin
- 31: main body
- 32: protrusion
- 40, 40A, 40B, 40C, 40D: attachment member
- 41: vibration-proof rubber (elastic body)
- 41a: insertion hole
- 42, 42A, 42C, 42D: tubular member
- 42a: first tubular member
- 42b: second tubular member
- 51: first bearing
- 52: second bearing
- 61: first bracket
- 62: second bracket
- 70: circuit board
- 100: mold
- 101: first block
- 101a: projection
- 102: second block

## Claims

1. A mold motor (1) comprising: a stator (10); a rotor (20) including a rotation shaft (21) and rotating by a magnetic force of the stator (10); a mold resin (30) covering at least a part of the stator (10); an elastic body (41) attachable to an installation object in which the mold (1) is installed; and one or more hard members (42) disposed around the elastic body (41), the one or more hard members (42) being harder than the elastic body (41), wherein the elastic body (41) and the one or more hard members (42) are fixed to the mold resin (30) by integral molding

2. The mold motor (1) according to Claim 1, wherein the mold resin (30) includes a protrusion (32) protruding outward in a radial direction that is a direction orthogonal to an axial direction of the rotation shaft (21), and the elastic body (41) and the hard members (42) are disposed in the protrusion (32).

3. The mold motor (1) according to Claim 1 or 2, wherein the mold motor (1) includes a tubular member (42A, 42C, 42D) as the hard member (42), and the tubular member (42A, 42C, 42D) is disposed outside the elastic body (41) to surround the elastic body (41).

4. The mold motor (1) according to Claim 3, wherein a part of the tubular member (42A, 42C, 42D) is embedded in the elastic body (41).

5. The mold motor (1) according to Claim 1 or 2, wherein the mold motor (1) includes a first tubular member (42a) and a second tubular member (42b) as the hard members 42), the first tubular member (42a) is disposed outside the elastic body (41) to surround the elastic body (41), and the second tubular member (42b) is disposed inside the elastic body (41).

6. The mold motor (1) according to Claim 5, wherein at least one of the first tubular member (42a) and the second tubular member (42b) is partially embedded in the elastic body (41).

7. The mold motor (1) according to any one of Claims 1 to 6, wherein the hard members (42) are made of a metal material.

8. The mold motor (1) according to any one of Claims 1 to 7, wherein the mold resin (30) is made of an unsaturated polyester resin.

9. The mold motor (1) according to any one of Claims 1 to 8, wherein the elastic body (41) is provided with an insertion hole (41a) through which a fixing member for attaching the mold motor Z (1) to the installation object can be inserted.

10. The mold motor (1) according to any one of Claims 1 to 9, wherein the elastic body (41) is a vibration-proof rubber that suppresses transmission of vibration generated in the mold motor (1) to the installation object

11. The mold motor (1) according to Claim 10, wherein the vibration-proof rubber is made of ethylene propylene rubber or nitrile rubber.

## Patentansprüche

1. Formmotor (1), der umfasst: einen Stator (10); einen Rotor (20), der eine Drehwelle (21) umfasst und durch eine magnetische Kraft des Stators (10) rotiert; ein Formharz (30), das zumindest einen Teil des Stators (10) bedeckt; einen elastischen Körper (41), der an einem Installationsobjekt befestigbar ist, in dem der Formmotor (1) installiert ist; und ein oder mehrere harte Elemente (42), die um den elastischen Körper (41) herum angeordnet sind, wobei das eine oder die mehreren harten Elemente (42) härter sind als der elastische Körper (41), wobei der elastische Körper (41) und das eine oder die mehreren harten Elemente (42) durch integrales Formen an dem Formharz (30) befestigt sind.

2. Formmotor (1) nach Anspruch 1, wobei das Formharz (30) einen Vorsprung (32) umfasst, der in einer radialen Richtung nach außen vorsteht, die eine Richtung senkrecht zu einer axialen Richtung der Drehwelle (21) ist, und der elastische Körper (41) und die harten Elemente (42) in dem Vorsprung (32) angeordnet sind.

3. Formmotor (1) gemäß Anspruch 1 oder 2, wobei der Formmotor (1) ein Rohrelement (42A, 42C, 42D) als hartes Element umfasst und das Rohrelement (42A, 42C, 42D) außerhalb des elastischen Körpers (41) angeordnet ist, um den elastischen Körper (41) zu umgeben.

4. Formmotor (1) nach Anspruch 3, wobei ein Teil des Rohrelements (42A, 42C, 42D) in den elastischen Körper (41) eingebettet ist.

5. Formmotor (1) nach Anspruch 1 oder 2, wobei der Formmotor (1) ein erstes Rohrelement (42a) und ein zweites Rohrelement (42b) als harte Elemente (42) umfasst, wobei das erste Rohrelement (42a) außerhalb des elastischen Körpers (41) angeordnet ist, um den elastischen Körper (41) zu umgeben, und wobei das zweite Rohrelement (42b) innerhalb des elastischen Körpers (41) angeordnet ist.

6. Formmotor (1) nach Anspruch 5, wobei zumindest das erste Rohrelement (42a) oder das zweite Rohrelement (42b) teilweise in den elastischen Körper (41) eingebettet sind.

7. Formmotor (1) nach einem der Ansprüche 1 bis 6, wobei die harten Elemente (42) aus einem metallischen Material bestehen.

8. Formmotor (1) nach einem der Ansprüche 1 bis 7, wobei das Formharz (30) aus einem ungesättigten Polyesterharz besteht.

9. Formmotor (1) nach einem der Ansprüche 1 bis 8, wobei der elastische Körper (41) mit einem Einsteckloch (41a) versehen ist, durch das ein Befestigungselement zum Anbringen des Formmotors (1) an dem Installationsobjekt eingeführt werden kann.

10. Formmotor (1) nach einem der Ansprüche 1 bis 9, wobei der elastische Körper (41) ein vibrationsfester Gummi ist, der die Übertragung von im Formmotor (1) erzeugten Vibrationen auf das Installationsobjekt unterdrückt.

11. Formmotor (1) nach Anspruch 10, wobei der vibrationsfeste Gummi aus Ethylen-Propylen-Gummi oder Nitrilgummi besteht.

## Revendications

1. Moteur moulé (1) comprenant :
un stator (10),
un rotor (20) présentant un arbre de rotation (21) et tournant sous l'effet d'une force magnétique du stator (10),
une résine moulée (30) recouvrant au moins une partie du stator (10),
un corps élastique (41) pouvant être fixé à un objet d'installation dans lequel le moteur moulé (1) est installé, et
un ou plusieurs éléments durs (42) disposés autour du corps élastique (41), le ou les éléments durs (42) étant plus durs que le corps élastique (41) ;
le corps élastique (41) et le ou les éléments durs (42) étant fixés à la résine moulée (30) par moulage monobloc.

2. Moteur moulé (1) selon la revendication 1, dans lequel la résine moulée (30) comprend une protubérance (32) faisant saillie vers l'extérieur dans une direction radiale qui est orthogonale à une direction axiale de l'arbre de rotation (21), et le corps élastique (41) et les éléments durs (42) sont disposés dans la protubérance (32).

3. Moteur moulé (1) selon la revendication 1 ou 2, ledit moteur moulé (1) comprenant un élément tubulaire (42A, 42C, 42D) en tant qu'élément dur (42), et l'élément tubulaire (42A, 42C, 42D) étant disposé à l'extérieur du corps élastique (41) pour entourer le corps élastique (41).

4. Moteur moulé (1) selon la revendication 3, dans lequel une partie de l'élément tubulaire (42A, 42C, 42D) est encastrée dans le corps élastique (41).

5. Moteur moulé (1) selon la revendication 1 ou 2, ledit moteur moulé (1) comprenant un premier élément tubulaire (42a) et un deuxième élément tubulaire (42b) en tant qu'éléments durs (42), le premier élément tubulaire (42a) étant disposé à l'extérieur du corps élastique (41) pour entourer le corps élastique (41), et le deuxième élément tubulaire (42b) étant disposé à l'intérieur du corps élastique (41).

6. Moteur moulé (1) selon la revendication 5, dans lequel le premier élément tubulaire (42a) et/ou le deuxième élément tubulaire (42b) sont partiellement encastrés dans le corps élastique (41).

7. Moteur moulé (1) selon l'une des revendications 1 à 6, dans lequel les éléments durs (42) se composent d'un matériau métallique.

8. Moteur moulé (1) selon l'une des revendications 1 à 7, dans lequel la résine moulée (30) se compose d'une résine polyester insaturée.

9. Moteur moulé (1) selon l'une quelconque des revendications 1 à 8, dans lequel le corps élastique (41) est pourvu d'un trou d'insertion (41a) à travers lequel un élément de fixation permettant de fixer le moteur moulé (1) à l'objet d'installation peut être inséré.

10. Moteur moulé (1) selon l'une quelconque des revendications 1 à 9, dans lequel le corps élastique (41) est un caoutchouc anti-vibrations qui supprime la transmission des vibrations, générées dans le moteur moulé (1), à l'objet d'installation.

11. Moteur moulé (1) selon la revendication 10, dans lequel le caoutchouc anti-vibrations se compose de caoutchouc éthylène-propylène ou de caoutchouc nitrile.
